# EUROPÄISCHE PATENTSCHRIFT

(11) **EP 2 233 809 B1**
(45) Veröffentlichungstag und Bekanntmachung des Hinweises auf die Patenterteilung: **22.08.2012**
(21) Anmeldenummer: 10157688.2
(22) Anmeldetag: 25.03.2010
(51) Int. Cl.: F16K 41/16

(54) **Fluidleitungsschieber-Spindellagerung mit korrosionsgeschütztem Schraubverschluss**
Fluid conduit push-spindle bearing with anti-corrosion screw lock
Palier à coulisse de conduite de fluide doté d'une fermeture à vis anticorrosion

(30) Priorität: 27.03.2009 CH 4962009
(43) Veröffentlichungstag der Anmeldung: 29.09.2010
(73) Patentinhaber: vonRoll infratec (investment) ag, 6300 Zug (CH)
(72) Erfinder: Portmann, Hansjörg, 4563, Gerlafingen (CH)
(74) Vertreter: OK pat AG

(56) Entgegenhaltungen:
- DE-A1- 2 140 975
- DE-A1- 3 728 264
- DE-C- 681 765
- DE-U1- 8 612 500
- GB-A- 2 122 727

## Beschreibung

Die Erfindung betrifft eine Fluidleitungsschieber-Spindellagerung mit korrosionsgeschütztem Schraubverschluss. Dazu umfasst diese Fluidleitungsschieber-Spindellagerung eine Dichtbüchse und einen Schieberoberteilhals, in welchen diese Dichtbüchse einschraubbar und mit einem O-Ring abdichtbar ausgebildet ist. Die Dichtbüchse ist zur drehbaren Aufnahme einer Schieberspindel mit einem Spindelbund und einer Drehachse ausgebildet. Der Schieberoberteilhals umfasst ein Muttergewinde, eine erste zylindrische Teilfläche und einen ringförmigen, inneren Absatz. Dieser Absatz stellt einen Anschlag für einen an der Dichtbüchse angeordneten Flansch bereit. Die Dichtbüchse umfasst eine zweite zylindrische Teilfläche und ein Bolzengewinde, dessen Steigung derjenigen des Muttergewindes entspricht. Das Einschrauben der Dichtbüchse in den Schieberoberteilhals ist mittels Beaufschlagen des inneren Absatzes durch den Flansch in einer Endstellung begrenzt. In dieser Endstellung ist der eingelegte O-Ring dichtend und radial zur Drehachse zwischen den sich in dieser Endstellung gegenüber angeordneten zylindrischen Teilflächen von Schieberoberteilhals und Dichtbüchse elastisch verformt.

Herkömmliche Gewinde für diesen Schraubverschluss sind seit langem aus dem Stand der Technik bekannt und mit dem Nachteil behaftet, dass sie oft Korrosionsschäden aufweisen, die das Gewinde blockieren können. Das Beschichten der Innenoberflächen von Fluidleitungsschiebern, insbesondere derer Oberteile, mit einer vor Korrosion schützenden Schicht ist an sich bekannt. Bei der Verwendung von herkömmlichen Gewinden wie z.B. gerundeten Trapezgewinden (DIN 30295), Whitworth-Rohrgewinden (DIN 2999 oder DIN 3858) oder Rundgewinden (DIN 15403) wird die vor Korrosion schützende Schicht beim Gewindeschneiden beschädigt, so dass der Korrosionsschutz im Gewindebereich entfällt. Alternativ zu einem solchen Nachschneiden könnte versucht werden, ein herkömmliches Gewinde nach dem Schneiden zu beschichten. In diesem Fall ist aber die Gängigkeit des Gewindes nicht mehr gewährleistet.

Es ist deshalb die Aufgabe der vorliegenden Erfindung, ein Gewinde für eine Fluidleitungsschieber-Spindellagerung zu finden, welches vollständig mit einer vor Korrosion schützenden Schicht überzogen werden kann und welches dadurch einen dauerhaften Korrosionsschutz gewährleistet.

Diese Aufgabe wird mit der im Anspruch 1 definierten Fluidleitungsschieber-Spindellagerung gelöst. Die erfindungsgemässe Fluidleitungsschieber-Spindellagerung ist gegenüber der eingangs beschriebenen, aus dem Stand der Technik bekannten Ausführungsform **dadurch gekennzeichnet, dass** das Muttergewinde und das Bolzengewinde als Rundgewinde ausgebildet sind und je ein Gewindeprofil definieren. Dabei weist das Gewindeprofil des Muttergewindes einen mittleren Durchmesser auf, der um 2 bis 10 mm, bevorzugt um 4 bis 8 mm, und speziell bevorzugt um 5 bis 6 mm, grösser ist als der mittlere Durchmesser des Gewindeprofils des Bolzengewindes. Auf das Muttergewinde des Schieberoberteilhalses ist erfindungsgemäss eine durchgehende, vor Korrosion schützende Schicht so aufgebracht, dass diese gegenüber dem eindrehenden Bolzengewinde einen Spalt von mindestens 0.1 mm offen lässt.

Erfindungsgemässe Weiterbildungen und bevorzugte Ausführungsformen der erfindungsgemässen Fluidleitungsschieber-Spindellagerung ergeben sich aus den abhängigen Ansprüchen.

Vorteile der erfindungsgemässen Fluidleitungsschieber-Spindellagerung umfassen:
- Der Korrosionsschutz am Schieberoberteilhals ist auch dann gewährleistet, wenn beim Einschrauben der Dichtbüchse hohe Drehmomente von über 400 Nm auftreten.
- Die grosse Steigung ermöglicht eine besonders rasche Montage und Demontage der Dichtbüchse.
- Grössere Rundgewinde mit ähnlichen oder gleichen Verhältnissen sind ebenfalls nutzbar.
- Die vorliegende Erfindung ist auf Rundgewinde mit Nenndurchmessern (Bolzen) bis Nennweite 100 mm, also von 43.3 mm, 45.3 mm, 47.3 mm, 49.3 mm, 51.3 mm, 54.3 mm, 57.3 mm, 59.3 mm, 61.3 mm, 64.3 mm, 67.3 mm, 69.3 mm, 71.3 mm, 74.3 mm, 77.3 mm, 79.3 mm, 81.3 mm, 84.3 mm, 87.3 mm, 89.3 mm, 91.3 mm, 94.3 mm, 97.3 mm und 99.3 mm mit den selben Verhältnissen anwendbar.

Die erfindungsgemässe Fluidleitungsschieber-Spindellagerung soll nun an Hand von Zeichnungen, die eine bevorzugte, beispielhafte Ausführungsform darstellen, und die den Umfang der Erfindung nicht einschränken sollen, näher erläutert. Dabei zeigt:
- Fig. 1: einen axialen Schnitt durch die Fluidleitungsschieber-Spindellagerung mit bis zur Endstellung eingeschraubter Dichtbüchse;
- Fig. 2: einen vergrösserten Ausschnitt aus der Figur 1, in welchem speziell bevorzugte Dimensionen des erfindungsgemässen, einseitig beschichteten Rundgewindes dargestellt sind.

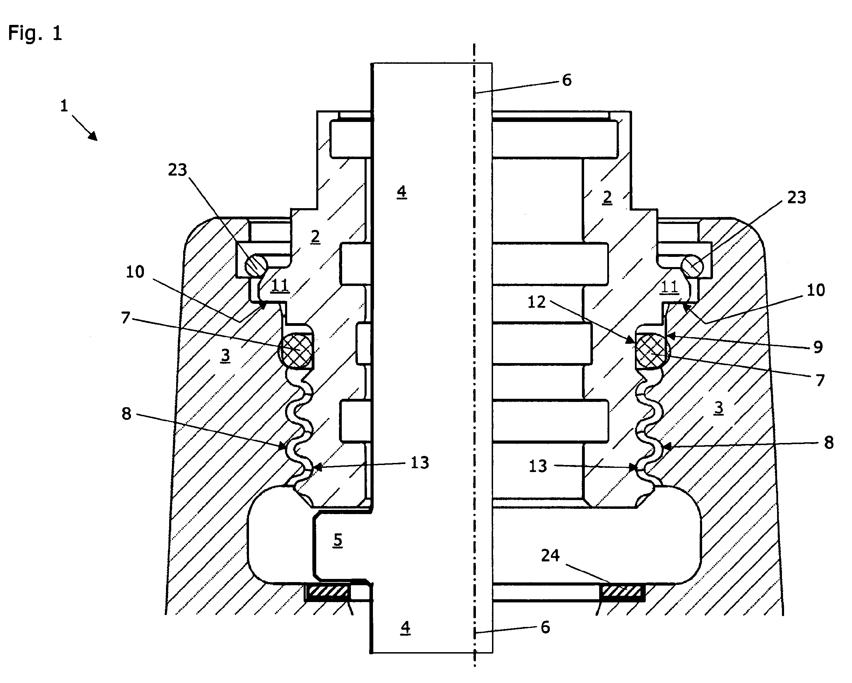

Die Figur 1 zeigt einen axialen Schnitt durch die Fluidleitungsschieber-Spindellagerung 1 mit einer eingesetzten, bis zur Endstellung in einen Schieberoberteilhals 3 eingeschraubten Dichtbüchse 2. Diese Dichtbüchse 2 ist zur drehbaren Aufnahme einer Schieberspindel 4 (hier nur teilweise gezeichnet) mit einem Spindelbund 5 und einer Drehachse 6 ausgebildet. Zudem ist die Dichtbüchse gegenüber dem Schieberoberteilhals 3 mit einem O-Ring 7 abdichtbar ausgebildet, wobei der Schieberoberteilhals 3 ein Muttergewinde 8, eine erste zylindrische Teilfläche 9 und einen ringförmigen, inneren Absatz 10 umfasst. Dieser Absatz 10 stellt einen Anschlag für einen an der Dichtbüchse 2 angeordneten Flansch 11 bereit. Die Dichtbüchse 2 umfasst zudem eine zweite zylindrische Teilfläche 12 und ein Bolzengewinde 13, dessen Steigung derjenigen des Muttergewindes 8 entspricht. Das Einschrauben der Dichtbüchse 2 in den Schieberoberteilhals 3 ist mittels Beaufschlagen des inneren Absatzes 10 durch den Flansch 11 in einer Endstellung begrenzt, in welcher der eingelegte O-Ring 7 dichtend und radial zur Drehachse 6 zwischen den sich in dieser Endstellung gegenüber angeordneten zylindrischen Teilflächen 9,12 von Schieberoberteilhals 3 und Dichtbüchse 2 elastisch verformt ist.

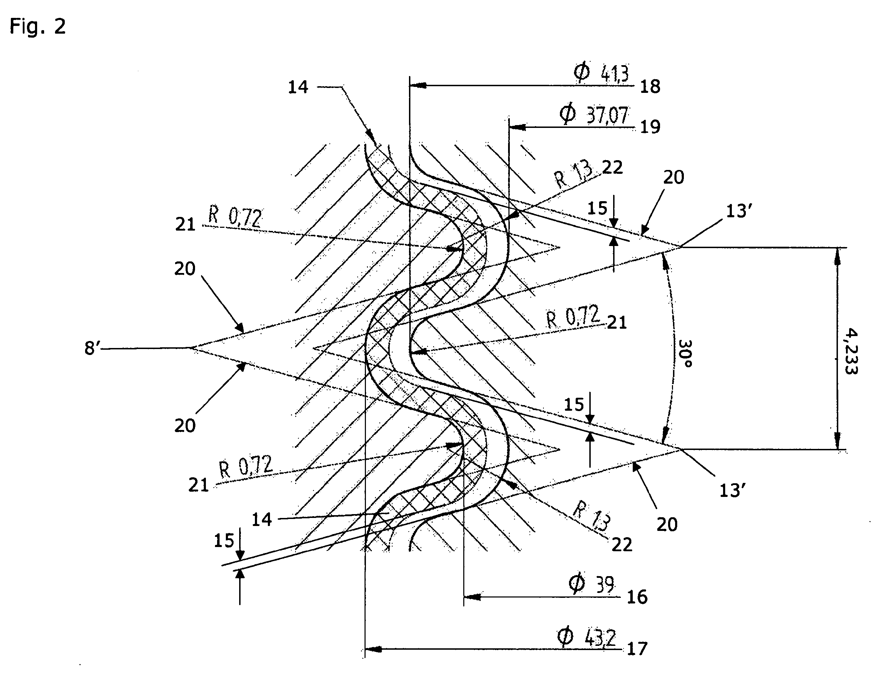

Das Muttergewinde 8 und das Bolzengewinde 13 sind als Rundgewinde ausgebildet und definieren je ein Gewindeprofil 8',13'. Dabei weist das Gewindeprofil 8' des Muttergewindes 8 einen mittleren Durchmesser auf, der um 2 bis 10 mm, bevorzugt um 4 bis 8 mm, speziell bevorzugt um 5 bis 6 mm, grösser ist als der mittlere Durchmesser des Gewindeprofils 13' des Bolzengewindes 13. Zudem ist auf das Muttergewinde 8 des Schieberoberteilhalses 3 eine durchgehende, vor Korrosion schützende Schicht 14 so aufgebracht, dass diese gegenüber dem eindrehenden Bolzengewinde 13 einen Spalt 15 von mindestens 0.1 mm offen lässt (vgl. Fig. 2).

Die Figur 2 zeigt einen vergrösserten Ausschnitt aus der Figur 1, in welchem speziell bevorzugte Dimensionen des erfindungsgemässen, einseitig beschichteten Rundgewindes dargestellt sind. Bevorzugt wird für das Herstellen der Fluidleitungsschieber-Spindellagerung 1 von einem Norm-Rundgewinde ausgegangen, das bei einer Nennweite von 42 mm einen Flankenwinkel von 30° und eine Steigung von 4.233 mm aufweist. Nach dem Überarbeiten des Muttergewindes 8 und/oder des Bolzengewindes 13 werden die Steigung von 4.233 mm und der Flankenwinkel von 30° beibehalten.

Speziell bevorzugt wird ein dargestelltes Muttergewinde 8 mit einem Aussendurchmesser 16 von 39 mm und mit einem Innendurchmesser 17 von 43.2 mm. Ebenfalls speziell bevorzugt wird ein dargestelltes Bolzengewinde 13 mit einem Aussendurchmesser 18 von 41.3 mm und mit einem Innendurchmesser 19 von 37.07 mm.

Das Muttergewinde 8 und das Bolzengewinde 13 weisen Flanken 20 auf, die durch einen kleinen Grundprofil-Radius 21 und durch einen grossen Grundprofil-Radius 22 miteinander verbunden sind. Dabei ist der grosse Grundprofil-Radius 22 vorzugsweise um einen Faktor 1.5 bis 2.0, speziell bevorzugt um einen Faktor 1.8 grösser als der kleine Grundprofil-Radius 21. Ganz speziell bevorzugt ist, dass diese Flanken 20 durch einen kleinen Grundprofil-Radius 21 von 0.72 mm und durch einen grossen Grundprofil-Radius 22 von 1.3 mm miteinander verbunden sind.

Damit die erfindungsgemässe Fluidleitungsschieber-Spindellagerung insbesondere als Schnellverschluss-System bei Anbohrarmaturen verwendet werden kann, umfasst sie zudem ein Sicherungselement 23, das zwischen der Dichtbüchse 2 und dem Schieberoberteilhals 3 einbaubar ist und das im eingebauten Zustand die in den Schieberoberteilhals 3 eingeschraubte Dichtbüchse 2 in der Endstellung fixiert. Derartige Sicherungselemente 23 sind aus dem Stand der Technik beispielsweise in der Form von Sprengringen bekannt (gezeigt in Fig. 2). Es können aber auch andere Sicherungselemente 23, wie z.B. ein Clip eingesetzt werden, wenn diese eine zuverlässige, aber nach Erfordernis lösbare Fixierung der Schraubverbindung zwischen der Dichtbüchse 2 und dem Schieberoberteilhals 3 sicherstellen.

Unter den vor Korrosion schützenden Schichten zum Auskleiden und Schützen der Fluidleitungsschieber-Spindellagerung vor Korrosion werden unterschiedlichste Polymere, wie z.B. Polyurethan und RILSAN-Beschichtungen (RILSAN^{®} Polyamid 11 oder 12, ARKEMA INC., Philadelphia, PA 19103-3222, USA) verwendet. In Frage kommen beispielsweise auch Email-Beschichtungen (Beschichtungen mit einem Schmelzgemisch aus Silikaten, Boraten und Fluoriden der Metalle Natrium, Kalium, Blei und Aluminium). Speziell als geeignet für die Beschichtung des fertig geschnittenen Muttergewindes 8 hat sich das Epoxydharz RESICOAT^{®} R4-FB von Akzo Nobel herausgestellt, weil insbesondere dieses Beschichtungsmaterial durch viele zuständige Stellen (z.B. nach dem NSF/ANSI STANDARD 61, DGS/VS 4 No99/217 oder ÖNORM B 5014) für den Gebrauch mit Trinkwasser zugelassen ist. Die fertige, mittels elektrostatischem Sprühverfahren, Flammspritzverfahren, oder im Wirbelsinterverfahren einseitig auf temperierte Oberflächen aufgetragene, vor Korrosion schützende Schicht weist (unter Berücksichtigung des Toleranzbereichs der angewendeten Beschichtungstechnologie) bevorzugt eine mittlere Dicke von 0.25 bis 0.5 mm auf.

Zum Eindrehen bzw. Einschrauben der Dichtbüchse 2 in den Schieberoberteilhals 3 können recht grosse Kräfte notwendig werden. Am mit einer Epoxybeschichtung von 0.5 mm Dicke versehenen Prototyp wurde mit über 400 Nm gearbeitet. Die Epoxybeschichtung auf dem Muttergewinde 8 zeigte nach dem Ein- und Ausbauen der Dichtbüchse 2 keinerlei Verletzungen.

Um sicherzustellen, dass der Spindelbund 5 der Schieberspindel 4 im zusammengebauten Zustand der Fluidleitungsschieber-Spindellagerung 1 gleitend gelagert ist, umfasst die erfindungsgemässe Fluidleitungsschieber-Spindellagerung 1 vorzugsweise eine Laufscheibe 24 (vgl. Fig. 1). Diese Laufscheibe 24 besteht bevorzugt aus Polyoxymethylen bzw. Polyformaldehyd (POM) und hat eine Dicke von ca. 1.5 bis 2mm.

### Bezugszeichenliste

- 1: Fluidleitungsschieber-Spindellagerung
- 2: Dichtbüchse
- 3: Schieberoberteilhals
- 4: Schieberspindel
- 5: Spindelbund
- 6: Drehachse
- 7: O-Ring
- 8: Muttergewinde
- 8': Gewindeprofil von 8
- 9: erste zylindrische Teilfläche
- 10: innerer Absatz
- 11: Flansch
- 12: zweite zylindrische Teilfläche

- 13: Bolzengewinde
- 13': Gewindeprofil von 13
- 14: vor Korrosion schützende Schicht
- 15: Spalt
- 16: Aussendurchmesser von 8
- 17: Innendurchmesser von 8
- 18: Aussendurchmesser von 13
- 19: Innendurchmesser von 13
- 20: Flanken
- 21: kleiner Grundprofil-Radius
- 22: grosser Grundprofil-Radius
- 23: Sicherungselement
- 24: Laufscheibe

## Patentansprüche

1. Fluidleitungsschieber-Spindellagerung (1) mit einer Dichtbüchse (2) und einem Schieberoberteilhals (3), in welchen diese Dichtbüchse (2), die zur drehbaren Aufnahme einer Schieberspindel (4) mit einem Spindelbund (5) und einer Drehachse (6) ausgebildet ist, einschraubbar und mit einem O-Ring (7) abdichtbar ausgebildet ist, wobei der Schieberoberteilhals (3) ein Muttergewinde (8), eine erste zylindrische Teilfläche (9) und einen ringförmigen, inneren Absatz (10) umfasst, der einen Anschlag für einen an der Dichtbüchse (2) angeordneten Flansch (11) bereitstellt, wobei die Dichtbüchse (2) eine zweite zylindrische Teilfläche (12) und ein Bolzengewinde (13) umfasst, dessen Steigung derjenigen des Muttergewindes (8) entspricht, wobei das Einschrauben der Dichtbüchse (2) in den Schieberoberteilhals (3) mittels Beaufschlagen des inneren Absatzes (10) durch den Flansch (11) in einer Endstellung begrenzt ist, in welcher der eingelegte O-Ring (7) dichtend und radial zur Drehachse (6) zwischen den sich in dieser Endstellung gegenüber angeordneten zylindrischen Teilflächen (9,12) von Schieberoberteilhals (3) und Dichtbüchse (2) elastisch verformt ist, **dadurch gekennzeichnet, dass** das Muttergewinde (8) und das Bolzengewinde (13) als Rundgewinde ausgebildet sind und je ein Gewindeprofil (8',13') definieren, wobei das Gewindeprofil (8') des Muttergewindes (8) einen mittleren Durchmesser aufweist, der um 2 bis 10 mm, bevorzugt um 4 bis 8 mm, speziell bevorzugt um 5 bis 6 mm, grösser ist als der mittlere Durchmesser des Gewindeprofils (13') des Bolzengewindes (13), und wobei auf das Muttergewinde (8) des Schieberoberteilhalses (3) eine durchgehende, vor Korrosion schützende Schicht (14) so aufgebracht ist, dass diese gegenüber dem eindrehenden Bolzengewinde (13) einen Spalt (15) von mindestens 0.1 mm offen lässt.

2. Fluidleitungsschieber-Spindellagerung (1) nach Anspruch 1, **dadurch gekennzeichnet, dass** das Rundgewinde bei einer Nennweite von 42 mm einen Flankenwinkel von 30° und eine Steigung von 4.233 mm aufweist.

3. Fluidleitungsschieber-Spindellagerung (1) nach Anspruch 1 oder 2, **dadurch gekennzeichnet, dass** das Muttergewinde (8) einen Aussendurchmesser (16) von 39 mm und einen Innendurchmesser (17) von 43.2 mm aufweist.

4. Fluidleitungsschieber-Spindellagerung (1) nach Anspruch 1, 2 oder 3, **dadurch gekennzeichnet, dass** das Bolzengewinde (13) einen Aussendurchmesser (18) von 41.3 mm und einen Innendurchmesser (19) von 37.07 mm aufweist.

5. Fluidleitungsschieber-Spindellagerung (1) nach Anspruch 1, **dadurch gekennzeichnet, dass** das Rundgewinde bei einer Nennweite von 42 mm bis 100 mm einen Flankenwinkel von 30° und eine Steigung von 4.233 mm aufweist.

6. Fluidleitungsschieber-Spindellagerung (1) nach einem der vorhergehenden Ansprüche, **dadurch gekennzeichnet, dass** das Muttergewinde (8) und das Bolzengewinde (13) Flanken (20) aufweisen, die durch einen kleinen Grundprofil-Radius (21) von 0.72 mm und durch einen grossen Grundprofil-Radius (22) von 1.3 mm miteinander verbunden sind.

7. Fluidleitungsschieber-Spindellagerung (1) nach einem der vorhergehenden Ansprüche, **dadurch gekennzeichnet, dass** die vor Korrosion schützende Schicht (14) eine mittlere Dicke von 0.25 mm bis 0.5 mm aufweist.

8. Fluidleitungsschieber-Spindellagerung (1) nach einem der vorhergehenden Ansprüche, **dadurch gekennzeichnet, dass** die vor Korrosion schützende Schicht (14) ausgewählt ist aus einer Gruppe, die Epoxydharz-, Polyurethan-, Rilsan- und Emailbeschichtungen umfasst.

9. Fluidleitungsschieber-Spindellagerung (1) nach einem der vorhergehenden Ansprüche, **dadurch gekennzeichnet, dass** sie eine Laufscheibe (24) umfasst, auf welcher der Spindelbund (5) der Schieberspindel (4) im zusammengebauten Zustand der Fluidleitungsschieber-Spindellagerung (1) gleitend gelagert ist.

10. Fluidleitungsschieber-Spindellagerung (1) nach einem der vorhergehenden Ansprüche, **dadurch gekennzeichnet, dass** sie zudem ein Sicherungselement (23) umfasst, das zwischen der Dichtbüchse (2) und dem Schieberoberteilhals (3) einbaubar ist und das im eingebauten Zustand die in den Schieberoberteilhals (3) eingeschraubte Dichtbüchse (2) in der Endstellung fixiert.

11. Verwendung einer Fluidleitungsschieber-Spindellagerung (1) nach Anspruch 10, **dadurch gekennzeichnet, dass** sie als modulares Schnellverschluss-System oder als Schnellverschluss-System bei Anbohrarmaturen eingesetzt wird.

## Claims

1. Spindle bearing for a fluid line slider (1), comprising a sealing bushing (2) and an upper slider part throat (3), in which this sealing bushing (2), which is adapted to rotatingly receive a slider spindle (4) comprising a spindle collar (5) and a rotation axis (6), is adapted to be screwed in and to be sealed by means of an O-ring (7), wherein the upper slider part throat (3) comprises a female thread (8), a first cylindrical partial surface (9) and an annular inner bench (10), which provides an abutment for a flange (11) arranged at the sealing bushing (2), wherein the sealing bushing (2) comprises a second cylindrical partial surface (12) and a bolt thread (13), the inclination of which corresponds to that of the female thread (8), wherein the screwing in of the sealing bushing (2) into the upper slider part throat (3) is restricted by means of loading the inner bench (10) by the flange (11) in an end position, in which the inlaid O-ring (7) is sealingly and elastically deformed radially relative to the rotation axis (6) between the cylindrical partial surfaces (10,11) of the upper slider part throat (3) and the sealing bushing (2) arranged opposite to each other in this end position, **characterized in that** the female thread (8) and the bolt thread (13) are formed as round threads and respectively define a thread profile (8', 13'), wherein the thread profile (8') of the female thread (8) has an average diameter, which is greater than the average diameter of the thread profile (13') of the bolt thread (13) by 2 to 10 mm, preferably by 4 to 8 mm, and particularly preferably by 5 to 6 mm, and wherein a layer (14) protecting against corrosion is applied on the female thread (8) of the upper slider part throat (3) such that this layer leaves open a seam (15) of at least 0.1 mm relative to the screwing in bolt thread (13).

2. Spindle bearing for a fluid line slider (1) according to claim 1, **characterized in that** the round thread has a flank angle of 30° and an inclination of 4.233 mm for a nominal diameter of 42 mm.

3. Spindle bearing for a fluid line slider (1) according to claim 1 or 2, **characterized in that** the female thread (8) has an outer diameter (16) of 39 mm and an inner diameter (17) of 43.2 mm.

4. Spindle bearing for a fluid line slider (1) according to claim 1, 2 or 3, **characterized in that** the bolt thread (13) has an outer diameter (18) of 41.3 mm and an inner diameter (19) of 37.07 mm.

5. Spindle bearing for a fluid line slider (1) according to claim 1, **characterized in that** the round thread has a flank angle of 30° and an inclination of 4.233 mm for a nominal diameter of 42 mm to 100 mm.

6. Spindle bearing for a fluid line slider (1) according to any one of the preceding claims, **characterized in that** the female thread (8) and the bolt thread (13) have flanks (20), which are connected to each other by a small basic profile radius (21) of 0.72 mm and by a large basic profile radius (22) of 1.3 mm.

7. Spindle bearing for a fluid line slider (1) according to any one of the preceding claims, **characterized in that** the layer (14) protecting against corrosion has an average thickness of 0.25 mm to 0.5 mm.

8. Spindle bearing for a fluid line slider (1) according to any one of the preceding claims, **characterized in that** the layer (14) protecting against corrosion is selected from a group, which comprises epoxy resin coatings, polyurethane coatings, rilsane coatings and emanel coatings.

9. Spindle bearing for a fluid line slider (1) according to any one of the preceding claims, **characterized in that** it comprises a washer disk (24), on which the spindle collar (5) of the slider spindle (4) is slidingly supported in the mounted state of the spindle bearing for a fluid line slider (1).

10. Spindle bearing for a fluid line slider (1) according to any one of the preceding claims, **characterized in that** it further comprises a retaining element (23), which is mountable between the sealing bushing (2) and the upper slider part throat (3) and which, in the mounted state, fixes the sealing bushing (2) that is screwed into the upper slider part throat (3) in the end position.

11. Use of a spindle bearing for a fluid line slider (1) according to claim 10, **characterized in that** it is used as a modular quick acting closing system or as a quick acting closure system for spot-drilling armatures.

## Revendications

1. Logement d'arbre pour un bouchoir en conduit d'un fluide (1), comprenant une bague scellant (2) et un col d'une partie supérieure du bouchoir (3), dans lequel col cette bague scellant (2), laquelle étant formée pour la réception tournante d'une arbre de bouchoir (4) comprenant un collier d'arbre (5) et un axe de rotation (6), est formée à être vissée et à être étanchée moyennant un joint torique (7), dans lequel le col de la partie supérieure du bouchoir (3) comprend un filetage femelle (8), une première surface partielle cylindrique (9) et un épaulement intérieur annulaire (10), qui fournit un arrêt pour un flasque (11) aménagé à la bague scellant (2), dans lequel la bague (2) scellant comprend une deuxième surface partielle cylindrique (12) et un filetage de vis (13), l'inclinaison duquel correspond à cette du filetage femelle (8), dans lequel le vissant de la bague scellant (2) dans le col de la partie supérieure du bouchoir (3) moyennant l'alimentation de l'épaulement intérieur (10) par le flasque (11) est délimité dans une position finale, dans laquelle le joint torique (7) inséré est étanchant et est déformé élastiquement radialement relative à l'axe de rotation (6) entre les surfaces partielles cylindriques (9,12) du col de la supérieure du bouchoir (3) et de la bague scellant (2) aménagées face à face dans cette position finale, **caractérisé en ce que** le filetage femelle (8) et le filetage de vis (13) sont formés comme un filetage rond et définissent respectivement un profil de filetage (8',13'), cependant le profil de filetage (8') du filetage femelle (8) a un diamètre moyen qui est plus large que le diamètre moyen du profil de filetage (13') du filetage de vis (13) par 2 à 10 mm, préférablement par 4 à 8 mm, et particulièrement préférablement par 5 à 6 mm, et cependant une couche anticorrosion (14) continue est appliquée sur le filetage femelle (8) du col de la partie supérieure du bouchoir (3) de façon que cette couche (14) laisse ouverte une fente (15) d'au moins 0.1 mm relative au filetage de vis (13) vissant.

2. Logement d'arbre pour un bouchoir en conduit d'un fluide (1) selon la revendication 1, **caractérisé en ce que** le filetage rond a un angle de flanc de 30° et une inclinaison de 4.233 mm pour une largeur nominale de 42 mm.

3. Logement d'arbre pour un bouchoir en conduit d'un fluide (1) selon les revendications 1 ou 2, **caractérisé en ce que** le filetage (8) femelle a un diamètre extérieur (16) de 39 mm et un diamètre intérieur (17) de 43.2 mm.

4. Logement d'arbre pour un bouchoir en conduit d'un fluide (1) selon la revendication 1, 2 ou 3, **caractérisé en ce que** le filetage de vis (13) a un diamètre extérieur (18) de 41.3 mm et un diamètre intérieur (19) de 37.07 mm.

5. Logement d'arbre pour un bouchoir en conduit d'un fluide (1) selon la revendication 1, **caractérisé en ce que** le filetage rond a un angle de flanc de 30° et une inclinaison de 4.233 mm pour une largeur nominale de 42 mm à 100 mm.

6. Logement d'arbre pour un bouchoir en conduit d'un fluide (1) selon quelques unes des revendications précédentes, **caractérisé en ce que** le filetage femelle (8) et le filetage de vis (13) ont des flancs (20), qui sont joints mutuellement par un rayon du profile de base petit (21) de 0.72 mm et par un rayon du profile de base grand (22) de 1.3 mm.

7. Logement d'arbre pour un bouchoir en conduit d'un fluide (1) selon quelques unes des revendications précédentes, **caractérisé en ce que** la couche anticorrosion (14) a une épaisseur moyenne de 0.25 mm à 0.5 mm.

8. Logement d'arbre pour un bouchoir en conduit d'un fluide (1) selon quelques unes des revendications précédentes, **caractérisé en ce que** la couche anticorrosion (14) est choisie d'un groupe comprenant des enductions en résine époxy, en polyuréthane, en rilsane et en émail.

9. Logement d'arbre pour un bouchoir en conduit d'un fluide (1) selon quelques unes des revendications précédentes, **caractérisé en ce qu'**il comprend une rondelle coureuse (24), sur laquelle le collier d'arbre (5) de l'arbre de bouchoir (4) est logé de façon glissant dans l'état assemblé du logement d'arbre pour le bouchoir en conduit d'un fluide (1).

10. Logement d'arbre pour un bouchoir en conduit d'un fluide (1) selon quelques unes des revendications précédentes, **caractérisé en ce qu'**il comprend en outre un élément d'arrêt (23), qui est encastrable entre la bague scellant (2) et le col de la partie supérieure du bouchoir (3) et qui, dans l'état monté, fixe la bague scellant (2) vissée dans le col de la partie supérieure du bouchoir (3) dans la position finale.

11. Usage d'un logement d'arbre pour un bouchoir en conduit d'un fluide (1) selon la revendication 10, **caractérisé en ce qu'**il est employé comme système à fermeture rapide modulaire ou comme système à fermeture rapide pour des armatures de perçage.
